# EUROPEAN PATENT APPLICATION

(11) **EP 4 597 385 A1**
(43) Date of publication of application: **06.08.2025**
(21) Application number: 24223197.5
(22) Date of filing: 24.12.2024
(51) Int. Cl.: G06Q 10/08, G06Q 10/087

(54) **PACKEGING TASK CONTROL METHOD AND APPARATUS, ELECTRONIC DEVICE AND STORAGE MEDIUM**

(30) Priority: 01.02.2024 CN 202410145261
(71) Applicant: Zhejiang Hengyi Petrochemical Co., Ltd., Zhejiang 311200 (CN); Hangzhou Yitong New Material Co., Ltd., Hangzhou, Zhejiang 311247 (CN); Shaoxing Shengong Packaging Co., Ltd., Shaoxing City, Zhejiang 311200 (CN)
(72) Inventor: WANG, Peng, ZHEJIANG, 311200 (CN); PENG, Xiantao, ZHEJIANG, 311200 (CN); QIU, Yibo, ZHEJIANG, 311200 (CN); LI, Dake, ZHEJIANG, 311200 (CN); WU, Xuan, ZHEJIANG, 311200 (CN); XU, Feng, ZHEJIANG, 311200 (CN)
(74) Representative: Lavoix

(57) **Abstract**

Provided is a packaging task control method and apparatus, an electronic device and a storage medium, relating to the field of computers and automatic control. The method includes: determining (S101) N batches of packageable yard spindles from a balancing room according to a preset time interval, and determining a storage duration and a storage quantity of each batch of packageable yard spindles in the balancing room among the N batches of packageable yard spindles, where N is an integer equal to or greater than 2; obtaining (S102) a predetermined packaging sequence of the N batches of packageable yard spindles based on the storage duration and the storage quantity of each batch of packageable yard spindles in the balancing room among the N batches of packageable yard spindles; and performing (S103) an automatic packaging task for the N batches of packageable yard spindles according to the predetermined packaging sequence.

## Description

### TECHNICAL FIELD

The present disclosure relates to the field of computers and automatic control, and particularly to a packaging task control method and apparatus, an electronic device and a storage medium.

### BACKGROUND

The packaging of yard spindle products is an important part of a yard production process. However, at present, due to a large number of manual processes involved in the packaging task of yard spindle products, the execution efficiency of the yard spindle packaging task will be seriously affected.

### SUMMARY

The present disclosure provides a packaging task control method and apparatus, an electronic device and a storage medium, to solve or alleviate one or more technical problems in the related art.

In a first aspect, the present disclosure provides a packaging task control method, including:
determining N batches of packageable yard spindles from a balancing room according to a preset time interval, and determining a storage duration and a storage quantity of each batch of packageable yard spindles in the balancing room among the N batches of packageable yard spindles, wherein N is an integer equal to or greater than 2;
obtaining a predetermined packaging sequence of the N batches of packageable yard spindles based on the storage duration and the storage quantity of each batch of packageable yard spindles in the balancing room among the N batches of packageable yard spindles; and
performing an automatic packaging task for the N batches of packageable yard spindles according to the predetermined packaging sequence.

In a second aspect, the present disclosure provides a packaging task control apparatus, including:
an information determination unit, configured to determine N batches of packageable yard spindles from a balancing room according to a preset time interval, and determine a storage duration and a storage quantity of each batch of packageable yard spindles in the balancing room among the N batches of packageable yard spindles, wherein N is an integer equal to or greater than 2;
a sequence obtaining unit, configured to obtain a predetermined packaging sequence of the N batches of packageable yard spindles based on the storage duration and the storage quantity of each batch of packageable yard spindles in the balancing room among the N batches of packageable yard spindles; and
a packaging task control unit, configured to perform an automatic packaging task for the N batches of packageable yard spindles according to the predetermined packaging sequence.

In a third aspect, the present disclosure provides an electronic device, including:
at least one processor; and
a memory connected in communication with the at least one processor,
where the memory stores an instruction executable by the at least one processor, and the instruction, when executed by the at least one processor, enables the at least one processor to execute the method of any one embodiment of the present disclosure.

In a fourth aspect, the present disclosure provides a non-transitory computer-readable storage medium storing a computer instruction thereon, where the computer instruction is used to cause a computer to execute the method of any one embodiment of the present disclosure.

In a fifth aspect, the present disclosure provides a computer program product including a computer program, where the computer program, when executed by a processor, implements the method of any one embodiment of the present disclosure.

In the technical solution provided according to the present disclosure, the N batches of packageable yard spindles may be determined from the balancing room according to the preset time interval, the storage duration and the storage quantity of each batch of packageable yard spindles in the balancing room among the N batches of packageable yard spindles may be determined, the predetermined packaging sequence of the N batches of packageable yard spindles may be automatically obtained based on the storage duration and the storage quantity of each batch of packageable yard spindles in the balancing room among the N batches of packageable yard spindles, and the automatic packaging task for the N batches of packageable yard spindles may be performed according to the predetermined packaging sequence. In this way, it is capable of replacing a large number of manual participation processes in the related art when performing the packaging task of yard spindle products with the automated packaging process, thereby greatly reducing the time of manual intervention and decision, so as to improve the execution efficiency of the yard spindle packaging task.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

In the accompanying drawings, the same reference numbers represent the same or similar parts or elements throughout the accompanying drawings, unless otherwise specified. These accompanying drawings are not necessarily drawn to scale. It should be understood that these accompanying drawings only depict some embodiments provided according to the present disclosure, and should not be considered as limiting the scope of the present disclosure.
FIG. 1 is a flowchart of a packaging task control method provided according to an embodiment of the present disclosure;
FIGS. 2A, 2B and 2C are diagrams illustrating a method for obtaining an overall loading condition representation diagram provided according to an embodiment of the present disclosure;
FIG. 3 is a schematic diagram of a preset feature provided according to an embodiment of the present disclosure;
FIG. 4 is a schematic structural block diagram of a packaging task control apparatus provided according to an embodiment of the present disclosure;
FIG. 5 is a schematic structural block diagram of an electronic device provided according to an embodiment of the present disclosure.

### DETAILED DESCRIPTION

The present disclosure will be further described in detail below with reference to the accompanying drawings. The same reference numerals in the accompanying drawings represent elements with the same or similar functions. Although various aspects of the embodiments are shown in the accompanying drawings, the drawings are not necessarily drawn in scale unless otherwise specified.

In addition, in order to better illustrate the present disclosure, numerous specific details are given in the specific embodiments below. Those skilled in the art should understand that the present disclosure can also be implemented without certain specific details. In some examples, methods, means, components and circuits familiar to those skilled in the art are not described in detail in order to highlight the main idea of the present disclosure.

As mentioned above, the packaging of yard spindle products is an important part of the yard production process. However, at present, due to the large number of manual processes involved in the packaging task of yard spindle products, the execution efficiency of the yard spindle packaging task will be seriously affected. For this reason, in order to improve the packaging efficiency of yard spindle products, an embodiment of the present disclosure provides a packaging task control method, which is applied to electronic devices such as computers and Programmable Logic Controllers (PLCs).

In addition, before explaining the packaging task control method provided according to the embodiment of the present disclosure, it is also necessary to explain that in the embodiment of the present disclosure, main types of the yard spindle products may include at least one of Partially Oriented Yarns (POY), Fully Drawn Yarns (FDY), Draw Textured Yarns (DTY) (or regarded as Low-Elastic Yarns) or the like. For example, the types of the yard spindle products may specifically include Polyester Partially Oriented Yarns, Polyester Fully Drawn Yarns, Polyester Drawn Yarns, Polyester Low-Elastic yarns (Polyester Draw Textured Yarns), etc.

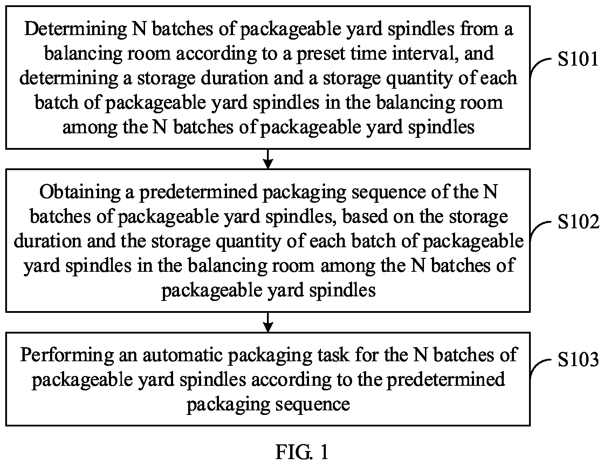

FIG. 1 is a flowchart of a packaging task control method provided according to an embodiment of the present disclosure. Hereafter, the packaging task control method provided according to the embodiment of the present disclosure will be described in conjunction with FIG. 1. It should be noted that although the logical order is shown in the flowchart, the steps shown or described may also be performed in other orders in some cases.

Step S101, N batches of packageable yard spindles are determined from a balancing room according to a preset time interval, and a storage duration and a storage quantity of each batch of packageable yard spindles in the balancing room among the N batches of packageable yard spindles are determined.

In an example, the preset time interval may be 3 hours (h), 5h, 7h, etc., the balancing room may be a flat warehouse (e.g., a single-layer warehouse) or a temporary storage warehouse (e.g., a multi-layer warehouse) to provide a natural cooling environment for the yard spindle products transferred from a winding workshop, and N may be an integer equal to or greater than 2. Each batch of packageable yard spindles among the N batches of packageable yard spindles may include a plurality of packageable yard spindles with the same production batch number, and the packageable yard spindles may be yard spindle products transferred from the winding workshop to the balancing room, and of which the temperature is less than or equal to a temperature threshold (e.g., a current room temperature in the balancing room) after natural cooling in the balancing room.

It should be noted that in the embodiment of the present disclosure, a plurality of yard spindle products (e.g., the plurality of packageable yard spindles) with the same production batch number may have the same product attribute. In an example, the product attribute may include at least one of basic attributes such as specification, color, spindle weight and the like.

It should also be noted that in the embodiment of the present disclosure, for each batch of packageable yard spindles among the N batches of packageable yard spindles, the storage duration of this batch of packageable yard spindles in the balancing room may be determined in the following manner: obtaining a storage duration of each yard spindle in the batch of packageable yard spindles in the balancing room to obtain a plurality of storage durations corresponding to the plurality of packageable yard spindles included in the batch of packageable yard spindles; using a longest or shortest storage duration among the plurality of storage durations as the storage duration of the batch of packageable yard spindles in the balancing room; or using an average of the plurality of storage durations as the storage duration of the batch of packageable yard spindles in the balancing room.

Step S102, a predetermined packaging sequence of the N batches of packageable yard spindles is obtained based on the storage duration and the storage quantity of each batch of packageable yard spindles in the balancing room among the N batches of packageable yard spindles.

That is to say, in the embodiment of the present disclosure, the packaging sequence of the N batches of packageable yard spindles may be automatically obtained based on the storage duration and the storage quantity of each batch of packageable yard spindles in the balancing room among the N batches of packageable yard spindles, as the predetermined packaging sequence.

Step S103, an automatic packaging task for the N batches of packageable yard spindles is performed according to the predetermined packaging sequence.

After the predetermined packaging sequence is obtained, the automatic packaging task for the N batches of packageable yard spindles may be performed according to the predetermined packaging sequence. For example, according to the predetermined packaging sequence, a plurality of yard spindle transport tools for loading the N batches of packageable yard spindles in the balancing room may be deployed, to control an outbound order of the N batches of packageable yard spindles (that is, an order of transferring from the balancing room to a yard spindle packaging workshop), and the working state of a plurality of yard spindle packaging equipments (e.g., manipulator, weighing equipment, detection equipment, film wrapping equipment, boxing equipment, etc.) disposed on the packaging line in the yard spindle packaging workshop may be controlled, to perform the automatic packaging task for the N batches of packageable yard spindles. In an example, the yard spindle transport tool may be a yard car or a yard box, and the present disclosure is not limited thereto.

By means of adopting the packaging task control method provided according to the embodiment of the present disclosure, the N batches of packageable yard spindles may be determined from the balancing room as well as the storage duration and the storage quantity of each batch of packageable yard spindles in the balancing room among the N batches of packageable yard spindles may be determined according to the preset time interval, the predetermined packaging sequence of the N batches of packageable yard spindles may be automatically obtained based on the storage duration and the storage quantity of each batch of packageable yard spindles in the balancing room among the N batches of packageable yard spindles, and then the automatic packaging task for the N batches of packageable yard spindles may be performed according to the predetermined packaging sequence. In this way, a large number of manual participation processes in the related art when performing the packaging task of yard spindle products may be replaced with an automated packaging process, thereby greatly reducing the time of manual intervention and decision, so as to improve the execution efficiency of the yard spindle packaging task.

In addition, it should be noted that in the embodiment of the present disclosure, if at a first moment, step S101 and step S102 have been performed to obtain the predetermined packaging sequence of the N batches of packageable yard spindles, and step S103 is being performed at the current moment, for example, the automatic packaging task for i-th (1≤i≤N, and i is an integer) batch of packageable yard spindles among the N batches of packageable yard spindles is being performed according to the predetermined packaging sequence, that is, the i-th batch of packageable yard spindles is being transferred from the balancing room to the yard spindle packaging workshop and automatically packageable on the packaging line, in a case that a new predetermined packaging sequence obtained at a second moment (following the first moment, and a time difference between the first moment and the second moment is a preset time interval) also includes the aforementioned i-th batch of packageable yard spindles, and the new predetermined packaging sequence does not define the packaging sequence of the aforementioned i-th batch of packageable yard spindles as a first priority, the new predetermined packaging sequence may be adjusted so that the new predetermined packaging sequence defines the packaging sequence of the aforementioned i-th batch of packageable yard spindles as the first priority. In this way, the number of batch changes on the packaging line may be reduced, thereby reducing the time that the packaging line is ineffectively occupied, so as to further improve the execution efficiency of the yard spindle packaging task.

In some optional embodiments, determining the N batches of packageable yard spindles from the balancing room in step S 1 0 1 may include the following steps.

Step S101-11, a highest representation temperature of each batch of yard spindle products among M batches of yard spindle products stored in the balancing room is obtained.

M is equal to or greater than N and is an integer, and each batch of yard spindle products among the M batches of yard spindle products may include a plurality of yard spindle products with the same production batch number.

In an example, when step S101-11 is performed, each batch of yard spindle products among the M batches of yard spindle products stored in the balancing room may be used as a first target yard spindle set, to obtain a latest yard spindle doffing time corresponding to the first target yard spindle set, and the highest representation temperature of the first target yard spindle set may be estimated based on the latest yard spindle doffing time corresponding to the first target yard spindle set.

In this example, the first target yard spindle set may include a plurality of yard spindle products, and each of the plurality of yard spindle products included in the first target yard spindle set has a corresponding yard spindle doffing time (i.e., time when the yard spindle product is removed from a winding machine). Based on this, in this example, the latest yard spindle doffing time corresponding to the first target yard spindle set may be obtained in the following manner: obtaining the yard spindle doffing time of each yard spindle product among the plurality of yard spindle products included in the first target yard spindle set, to obtain a plurality of yard spindle doffing time corresponding to the plurality of yard spindle products included in the first target yard spindle set; and using the yard spindle doffing time which is latest among the plurality of yard spindle doffing time as the latest yard spindle doffing time corresponding to the first target yard spindle set.

After the latest yard spindle doffing time corresponding to the first target yard spindle set is obtained, the highest representation temperature of the first target yard spindle set may be estimated based on the latest yard spindle doffing time corresponding to the first target yard spindle set. For example, when a time difference between the latest yard spindle doffing time corresponding to the first target yard spindle set and the current time is less than or equal to a preset time length, a first temperature value may be used as the highest representation temperature of the first target yard spindle set. When the time difference between the latest yard spindle doffing time corresponding to the first target yard spindle set and the current time is greater than the preset time length, a second temperature value may be used as the highest representation temperature of the first target yard spindle set. In an example, the preset time length may be any time length in the time length range [6h, 8h], the first temperature value may be a fixed temperature value greater than the second temperature value, or a variable temperature value that is negatively correlated with the latest yard spindle doffing time corresponding to the first target yard spindle set and greater than the second temperature value. In other words, the earlier the latest yard spindle doffing time corresponding to the first target yard spindle set, the higher variable temperature value that is greater than the second temperature value may be obtained as the highest representation temperature of the first target yard spindle set, and on the contrary, the later the latest yard spindle doffing time corresponding to the first target yard spindle set, the lower variable temperature value that is greater than the preset fixed value may be obtained as the highest representation temperature of the first target yard spindle set. The second temperature value may be the current room temperature in the balancing room.

In another example, when step S101-11 is performed, each batch of yard spindle products among the M batches of yard spindle products stored in the balancing room may be used as a first target yard spindle set, to obtain a temperature sampling result corresponding to the first target yard spindle set, and a highest representation temperature of the first target yard spindle set may be obtained based on the temperature sampling result corresponding to the first target yard spindle set.

In this example, the first target yard spindle set may include a plurality of yard spindle products, and each of the plurality of yard spindle products included in the first target yard spindle set has a corresponding spindle position number (i.e., a position number of the yard spindle product on a yard spindle winding rod before the yard spindle product is removed from the winding machine). It should be noted that in this example, for a certain yard spindle product, the larger the corresponding spindle position number, the more end postion of the yard spindle winding rod the yard spindle product is located before the yard spindle product is removed from the winding machine (that is, the yard spindle product is located at the innermost part of the winding machine). Therefore, when the yard spindle product is removed from the winding machine, the initial temperature of the yard spindle product is higher, and thus the required natural cooling time is longer. Based on this, in this example, the temperature sampling result corresponding to the first target yard spindle set may be obtained in the following manner: determining a plurality of target yard spindles whose corresponding spindle position numbers are preset numbers from the plurality of yard spindle products included in the first target yard spindle set; and using a plurality of temperature detection values corresponding to the plurality of target yard spindles as the temperature sampling result corresponding to the first target yard spindle set. In an example, the preset number may be a position serial number of the yard spindle product at the end position on the yard spindle winding rod. For example, when the position serial number of the yard spindle product at the end position on the yard spindle winding rod is 12, the preset number may be 12.

After the temperature sampling result corresponding to the first target yard spindle set is obtained, the temperature detection value with the largest value may be selected from the temperature sampling result as the highest representation temperature of the first target yard spindle set.

That is to say, in the embodiment of the present disclosure, when step S101-11 is performed, each batch of yard spindle products among the M batches of yard spindle products stored in the balancing room may be used as the first target yard spindle set, to obtain the latest yard spindle doffing time corresponding to the first target yard spindle set, and the highest representation temperature of the first target yard spindle set may be estimated based on the latest yard spindle doffing time corresponding to the first target yard spindle set. Since the highest representation temperature of the first target yard spindle set is estimated based on the latest yard spindle doffing time corresponding to the first target yard spindle set, the reliability of the highest representation temperature of the first target yard spindle set may be improved, thereby improving the accuracy of the N batches of packageable yard spindles determined subsequently.

In the embodiment of the present disclosure, when step S101-11 is performed, each batch of yard spindle products among the M batches of yard spindle products stored in the balancing room may be also used as the first target yard spindle set, to obtain a temperature sampling result corresponding to the first target yard spindle set, and to obtain the highest representation temperature of the first target yard spindle set based on the temperature sampling result corresponding to the first target yard spindle set. Since the highest representation temperature of the first target yard spindle set is obtained based on the temperature sampling result corresponding to the first target yard spindle set, and the temperature sampling result corresponding to the first target yard spindle set only includes a small number of temperature detection values, the obtaining efficiency of the highest representation temperature of the first target yard spindle set may be improved, thereby improving the determination efficiency of the N batches of packageable yard spindles.

Step S101-12, a current room temperature in the balancing room is obtained as a temperature threshold.

Step S101-13, N batches of yard spindle products whose highest representation temperature is less than or equal to the temperature threshold among the M batches of yard spindle products are used as N batches of packageable yard spindles.

For example, M is equal to 5, the highest representation temperature of the first batch of yard spindle products among the 5 batches of yard spindle products is 22 degrees, the highest representation temperature of the second batch of yard spindle products is 22 degrees, the highest representation temperature of the third batch of yard spindle products is 22 degrees, the highest representation temperature of the fourth batch of yard spindle products is 22 degrees, the highest representation temperature of the fifth batch of yard spindle products is 38 degrees, and the temperature threshold is 22 degrees. Therefore, it can be determined that N is equal to 4, and the 4 batches of packageable yard spindles are the first batch of yard spindle products, the second batch of yard spindle products, the third batch of yard spindle products, and the fourth batch of yard spindle products, respectively.

Through the above steps included in step S101, in the embodiment of the present disclosure, the highest representation temperature of each batch of yard spindle products among the M batches of yard spindle products stored in the balancing room may be obtained, the current room temperature in the balancing room may be obtained as the temperature threshold, and then the N batches of yard spindle products with the highest representation temperature less than or equal to the temperature threshold among the M batches of yard spindle products may be taken as the N batches of packageable yard spindles. In this way, it can be ensured that a plurality of packageable yard spindles included in each batch of packageable yard spindles among the N batches of packageable yard spindles are all yard spindle products with a temperature less than or equal to the temperature threshold, so as to avoid premature packaging of yard spindle products that have not been completely cooled, thereby affecting the quality of the yard spindle products.

In some optional embodiments, step S102 may include the following steps:
Step S102-11, if there are Z batches of first target yard spindles whose storage duration in the balancing room exceeds a preset duration threshold among the N batches of packageable yard spindles, the Z batches of first target yard spindles are determined from the N batches of packageable yard spindles, and K batches of second target yard spindles other than the Z batches of first target yard spindles are determined.

In an example, Z may be an integer equal to or greater than 1 and less than or equal to N, K may be an integer equal to or greater than 1 and less than or equal to N, the preset duration threshold may be 5 days, 7 days, 10 days, etc., which may be set according to actual requirements, and the present disclosure is not limited thereto.

Step S102-12, the Z batches of first target yard spindles are arranged in descending order according to the storage duration, to obtain a first predetermined sequence of the Z batches of first target yard spindles.

Step S102-13, the K batches of second target yard spindles are arranged in descending order according to the storage quantity, to obtain a second predetermined sequence of the K batches of second target yard spindles.

Step S102-14, the K batches of second target yard spindles arranged in the second predetermined sequence are arranged after the Z batches of first target yard spindles arranged in the first predetermined sequence, to obtain the predetermined packaging sequence of the N batches of packageable yard spindles.

For example, N is equal to 4, and the 4 batches of packageable yard spindles are the first batch of yard spindle products, the second batch of yard spindle products, the third batch of yard spindle products, and the fourth batch of yard spindle products, respectively. Among the 4 batches of packageable yard spindles, there are 2 batches of first target yard spindles (i.e., Z=2) whose storage duration in the balancing room exceeds a preset duration threshold (e.g., 7 days), i.e., the third batch of yard spindle products and the fourth batch of yard spindle products, the storage duration of the third batch of yard spindle products in the balancing room is 10 days, and the storage duration of the fourth batch of yard spindle products in the balancing room is 8 days. Therefore, the first predetermined sequence of the 2 batches of first target yard spindles may be: the third batch of yard spindle products > the fourth batch of yard spindle products. At the same time, 2 batches of second target yard spindles (i.e., K=2) other than the 2 batches of first target yard spindles may be determined from the 4 batches of packageable yard spindles, i.e., the first batch of yard spindle products and the second batch of yard spindle products, the storage quantity of the first batch of yard spindle products in the balancing room is 2000, and the storage quantity of the second batch of yard spindle products in the balancing room is 3012. Therefore, the second predetermined sequence of the 2 batches of second target yard spindles may be: the second batch of yard spindle products > the first batch of yard spindle products.

After that, the two batches of second target yard spindles arranged in the second predetermined sequence may be arranged after the two batches of first target yard spindles arranged in the first predetermined sequence, and the predetermined packaging sequence of the four batches of packageable yard spindles may be: the third batch of yard spindle products > the fourth batch of yard spindle products > the second batch of yard spindle products > the first batch of yard spindle products.

Through the above steps included in step S102, in the embodiment of the present disclosure, when the automatic packaging task for the N batches of packageable yard spindles is performed according to the predetermined packaging sequence, on one hand, the Z batches of first target yard spindles among the N batches of packageable yard spindles may be preferentially transferred from the balancing room to the yard spindle packaging workshop, and the Z batches of first target yard spindles may be automatically packageable, so as to avoid excessive storage space in the balancing room being occupied for a long time; on the other hand, the K batches of second target yard spindles among the N batches of packageable yard spindles may be arranged in descending order according to the storage quantity, so as to preferentially transfer a certain batch of second target yard spindles with a larger storage quantity in the balancing room among the K batches of second target yard spindles from the balancing room to the yard spindle packaging workshop, and automatically package this batch of second target yard spindles. In this way, when the N batches of packageable yard spindles stored in the balancing room are dynamically changed, the number of batch changes on the packaging line may be reduced, thereby reducing the time that the packaging line is ineffectively occupied, so as to further improve the execution efficiency of the yard spindle packaging task.

In some optional embodiments, step S103 may include the following steps.

Step S103-11, a yard spindle set to be packaged is determined from the N batches of packageable yard spindles according to the predetermined packaging sequence.

In an example, the yard spindle set to be packaged may be a batch of packageable yard spindles that are to be transferred from the balancing room to the yard spindle packaging workshop so as to be automatically packaged in the yard spindle packaging workshop.

Step S103-12, a target transport tool for loading at least part of packageable yard spindles in the yard spindle set to be packaged among a plurality of yard spindle transport tools is controlled to move from the balancing room to the yard spindle packaging workshop.

After the yard spindle set to be packaged is determined, a plurality of outbound tools for loading the yard spindle set to be packaged among the plurality of yard spindle transport tools may be determined, and each of the plurality of outbound tools may be used as the target transport tool. That is to say, there are a plurality of target transport tools in the balancing room. Therefore, after the plurality of target transport tools are determined, a plurality of target transport tools may be controlled to move from the balancing room to the yard spindle packaging workshop one after another.

Step S103-13, an overall loading situation representation diagram of the target transport tool is obtained.

In an example, the target transport tool may include a first side and a second side, and the first side and the second side may be respectively provided with a plurality of yard spindle loading positions. The overall loading situation representation diagram may be used to represent an actual loading situation of the plurality of yard spindle loading positions provided on the first side of the target transport tool, and used to represent an actual loading situation of the plurality of yard spindle loading positions provided on the second side of the target transport tool.

Further, in the embodiment of the present disclosure, a first image capturing device may be controlled to face the first side of the target transport tool to capture a front view of the target transport tool as a first depth image, and a second image capturing device may be controlled to face the second side of the target transport tool to capture a front view of the target transport tool as a second depth image. In an example, the first image capturing device and the second image capturing device may be depth cameras. After the first depth image and the second depth image are obtained, the overall loading situation representation diagram may be obtained in the following manner: based on the first depth image, obtaining a single-side loading situation representation diagram of the target transport tool on the first side as a first loading situation representation diagram; based on the second depth image, obtaining a single-side loading situation representation diagram of the target transport tool on the second side as a second loading situation representation diagram; and splicing the first loading situation representation diagram and the second loading situation representation diagram to obtain the overall loading situation representation diagram.

Hereafter, the specific method for obtaining the overall loading situation representation diagram is further described.

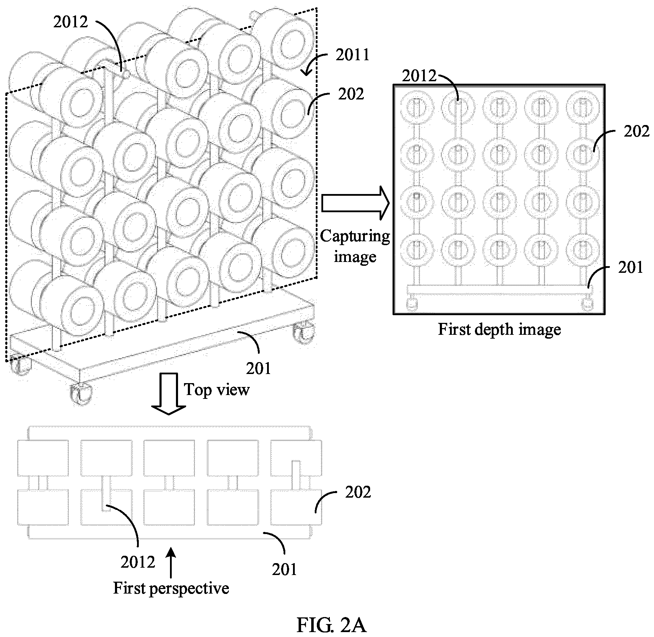

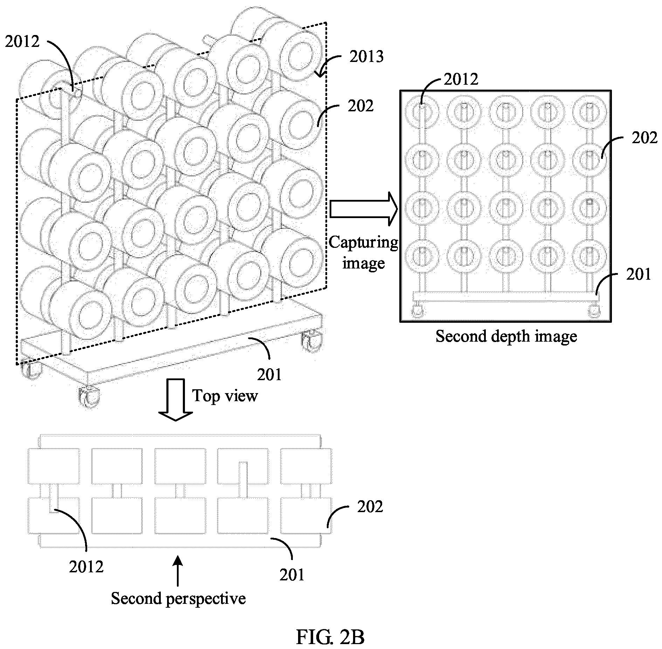

In conjunction with FIG. 2A and FIG. 2B, in an embodiment of the present disclosure, the first image capturing device (not shown in FIG. 2A) may be controlled to face the first side 2011 of the target transport tool 201 (the first side 2011 of the target transport tool 201 is provided with a plurality of yard spindle loading positions 2012 for loading the packageable yard spindle 202), to capture the front view of the target transport tool 201 from a first perspective as the first depth image, and the second image capturing device (not shown in FIG. 2B) may be controlled to face the second side 2013 of the target transport tool 201 (the second side 2013 of the target transport tool 201 is also provided with a plurality of yard spindle loading positions 2012 for loading the packageable yard spindle 202), to capture the front view of the target transport tool 201 from a second perspective as the second depth image. In an example, the first perspective may be the front perspective of the target transport tool 201 on the first side 2011, and the second perspective may be the front perspective of the target transport tool 201 on the second side 2013.

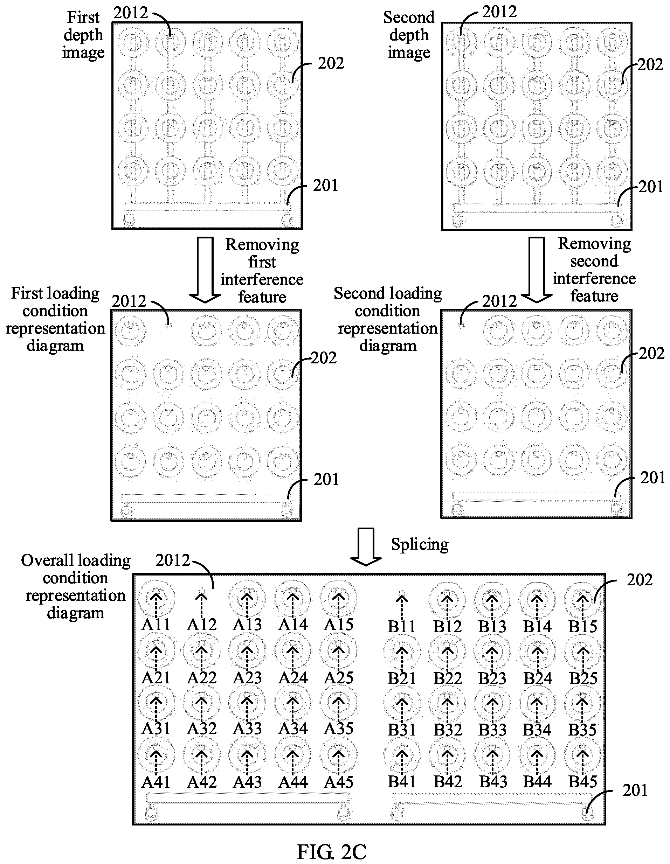

In conjunction with FIG. 2A and FIG. 2C, after the first image capturing device is controlled to face the first side 2011 of the target transport tool 201 and to capture the front view of the target transport tool 201 from the first perspective as the first depth image, a first interference feature in the first depth image may be removed based on the depth value of each pixel point in the first depth image, and a single-side loading condition representation diagram of the target transport tool 201 on the first side 2011 may be obtained as the first loading condition representation diagram. In an example, the first interference feature may include image features in the first depth image corresponding to the packageable yard spindles 202 loaded by the plurality of yard spindle loading positions 2012 disposed on the second side 2013 of the target transport tool 201. For example, the pixel points in the first depth image whose depth value is greater than a first depth threshold may be removed to remove the first interference feature in the first depth image. The first depth threshold may be specifically set according to actual conditions, and the embodiment of the present disclosure does not specifically limit the first depth threshold.

In conjunction with FIG. 2B and FIG. 2C, after the second image capturing device is controlled to face the second side 2013 of the target transport tool 201 and to capture the front view of the target transport tool 201 from the second perspective as the second depth image, a second interference feature in the second depth image may be removed based on the depth value of each pixel point in the second depth image, and a single-side loading condition representation diagram of the target transport tool 201 on the second side 2013 may be obtained as the second loading condition representation diagram. In an example, the second interference feature may include image features in the second depth image corresponding to the packageable yard spindles 202 loaded by the plurality of yard spindle loading positions 2012 disposed on the first side 2011 of the target transport tool 201. For example, the pixel points in the second depth image whose depth value is greater than a second depth threshold may be removed to remove the second interference feature in the second depth image. The second depth threshold may be specifically set according to actual conditions, and the embodiment of the present disclosure does not specifically limit the second depth threshold.

After the first loading situation representation diagram and the second loading situation representation diagram are obtained, the first loading situation representation diagram and the second loading situation representation diagram may be spliced to obtain the overall loading situation representation diagram as shown in FIG. 2C, so as to be used to represent that among the plurality of yard spindle loading positions 2012 (specifically, yard spindle loading positions A11-A45) on the first side 2011 of the target transport tool 201, the yard spindle loading position A12 is in a vacant state, and used to represent that among the plurality of yard spindle loading positions 2012 (specifically, yard spindle loading positions B11-B45) on the second side 2013 of the target transport tool 201, the yard spindle loading position B11 is in a vacant state.

Step S103-14, after determining, based on the overall loading situation representation diagram, that basic data corresponding to the target transport tool needs to be updated, the basic data is updated to obtain the updated basic data.

In an example, the basic data may include original vacancy information, which may be used to represent an original vacancy situation of each yard spindle loading position among the plurality of yard spindle loading positions of the target transport tool. For example, for each of the plurality of yard spindle loading positions, value "1" may be used to indicate that the yard spindle loading position is in a non-vacant state, that is, the yard spindle loading position is loaded with the packageable yard spindle, and value "0" may be used to indicate that the yard spindle loading position is in a vacant state, that is, the yard spindle loading position is not loaded with the packageable yard spindle. The basic data may also include yard spindle information corresponding to each of the plurality of non-vacant loading positions (i.e., yard spindle loading positions loaded with packageable yard spindles) of the target transport tool, including production date, production workshop number, yard spindle doffing time, production batch number, grade, specification, color and the like of the packageable yard spindle loaded on the non-vacant loading position.

In an example, the following method may be used to determine whether the basic data corresponding to the target transport tool needs to be updated: based on the overall loading situation representation diagram, obtaining actual vacancy information of the target transport tool to represent an actual vacancy situation of each of the plurality of yard spindle loading positions of the target transport tool; if the actual vacancy information is different from the original vacancy information in the basic data, determining that the basic data corresponding to the target transport tool needs to be updated; and when the actual vacancy information is the same as the original vacancy information in the basic data, determining that the basic data corresponding to the target transport tool does not need to be updated.

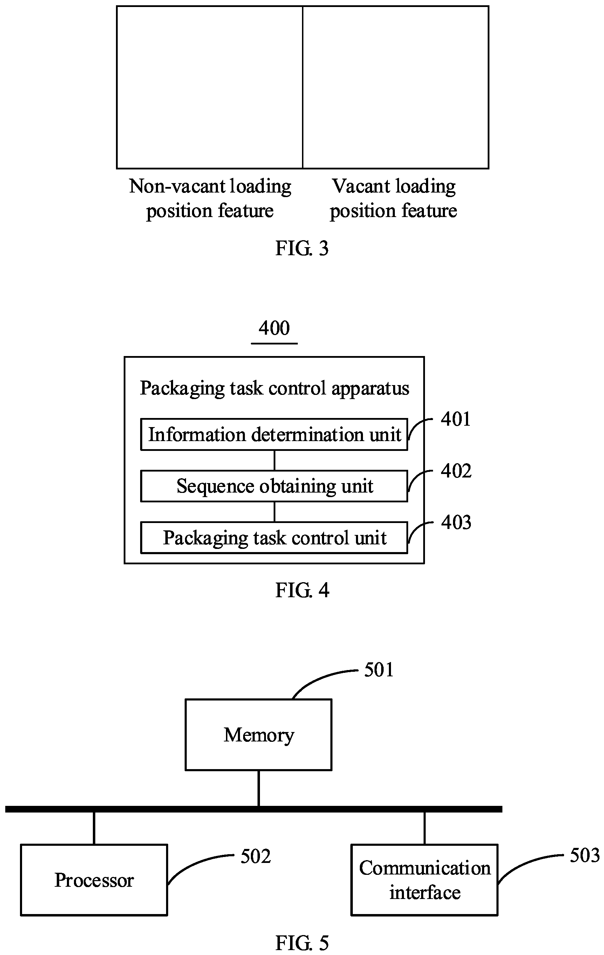

Further, in this example, a feature matching method may be used to obtain the actual vacancy information of the target transport tool based on the overall loading situation representation diagram. For example, a Scale-Invariant Feature Transform (SIFT) algorithm, a Speeded Up Robust Features (SURF) processing algorithm, an Oriented Fast and Rotated Brief (ORB) algorithm and the like may be used to extract image features in the overall loading situation representation diagram and match them with preset features to obtain the actual vacancy information of the target transport tool. In an example, the preset feature may be a non-vacant loading position feature or a vacant loading position feature, as shown in FIG. 3.

Since the actual vacancy information of the target transport tool is obtained based on the overall loading situation representation diagram, and after the actual vacancy information of the target transport tool is obtained, it can be determined by a simple comparison method whether the basic data corresponding to the target transport tool needs to be updated, the execution efficiency of the yard spindle packaging task may be further improved.

In addition, the overall loading situation representation diagram obtained by the method of "controlling the first image capturing device to face the first side of the target transport tool to capture the front view of the target transport tool as the first depth image, and controlling the second image capturing device to face the second side of the target transport tool to capture the front view of the target transport tool as the second depth image; based on the first depth image, obtaining the single-side loading situation representation diagram of the target transport tool on the first side as the first loading situation representation diagram; based on the second depth image, obtaining the single-side loading situation representation diagram of the target transport tool on the second side as the second loading situation representation diagram; and splicing the first loading situation representation diagram and the second loading situation representation diagram" only includes simple and necessary image features. Therefore, when determining whether the basic data corresponding to the target transport tool needs to be updated based on the overall loading situation representation diagram, the reliability of the determination result may be ensured. In this way, when performing the automatic packaging task for the yard spindle set to be packaged based on the updated basic data, an error rate of the automatic packaging task may be reduced, thereby further reducing time consumed by manual intervention and error handling, so as to further improve the execution efficiency of the yard spindle packaging task.

For example, the target transport tool may include a first side and a second side, and the first side and the second side may be respectively provided with 20 yard spindle loading positions. The actual loading condition of the 20 yard spindle loading positions provided on the first side is shown in FIG. 2A, and the actual loading condition of the 20 yard spindle loading positions provided on the second side is shown in FIG. 2B. Correspondingly, the overall loading condition representation diagram of the target transport tool is shown in FIG. 2C. Based on the overall loading condition representation diagram, the actual vacancy information of the target transport tool as shown in Table 1 may be obtained.

In this example, the basic data corresponding to the target transportation tool is shown in Table 2.

Obviously, the actual vacancy information is different from the original vacancy information in the basic data. Therefore, it is determined that the basic data corresponding to the target transportation tool needs to be updated, and the updated basic data is shown in Table 3.

**Table 1**

| | Target Transport Tool | | | | | |
|---|---|---|---|---|---|---|
| | First Side | | | Second Side | | |
| Yard Spindle Loading Position | A11 | A12 | ... | B11 | B12 | ... |
| Actual Vacancy Information | 1 | 0 | ... | 0 | 1 | ... |

**Table 2**

| | Basic Data | | | | | |
|---|---|---|---|---|---|---|
| | Target Transport Tool | | | | | |
| | First Side | | | Second Side | | |
| Yard Spindle Loading Position | A11 | A12 | ... | B11 | B12 | ... |
| Original Vacancy Information | 1 | 0 | ... | 1 | 1 | ... |
| Production Date | 2024.01.05 | / | ... | 2024.01.05 | 2024.01.05 | ... |
| Production Workshop Number | 0010 | / | ... | 0010 | 0010 | ... |
| Yard Spindle Doffing Time | 13:45:30 | / | ... | 13:45:45 | 13:45:45 | ... |
| Production Batch Number | M5050501 | / | ... | M5050501 | M5050501 | ... |
| Grade | AA | / | ... | AA | AA | ... |
| Specification | 59dtex/24f | / | ... | 59dtex/24f | 59dtex/24f | ... |
| Color | Apricot Yellow | / | ... | Apricot Yellow | Apricot Yellow | ... |
| ⋮ | ⋮ | ⋮ | ⋮ | ⋮ | ⋮ | ⋮ |

**Table 3**

| | Basic Data | | | | | |
|---|---|---|---|---|---|---|
| | Target Transport Tool | | | | | |
| | First Side | | | Second Side | | |
| Yard Spindle Loading Position | A11 | A12 | ... | B11 | B12 | ... |
| Original Vacancy Information | 1 | 0 | ... | 0 | 1 | ... |
| Production Date | 2024.01.05 | / | ... | / | 2024.01.05 | ... |
| Production Workshop Number | 0010 | / | ... | / | 0010 | ... |
| Yard Spindle Doffing Time | 13:45:30 | / | ... | / | 13:45:45 | ... |
| Production Batch Number | M5050501 | / | ... | / | M5050501 | ... |
| Grade | AA | / | ... | / | AA | ... |
| Specification | 59dtex/24f | / | ... | / | 59dtex/24f | ... |
| Color | Apricot Yellow | / | ... | / | Apricot Yellow | ... |
| ⋮ | ⋮ | ⋮ | ⋮ | ⋮ | ⋮ | ⋮ |

Step S103-15, an automatic packaging task for the yard spindle set to be packaged is performed based on the updated basic data.

Based on the updated basic data, the actual quantity of packageable yard spindles included in the yard spindle set to be packaged may be accurately obtained, so that the automatic packaging task for the yard spindle set to be packaged may be executed based on the actual quantity of packageable yard spindles included in the yard spindle set to be packaged. For example, the quantity of packagings corresponding to the yard spindle set to be packaged may be determined based on the actual quantity of packageable yard spindles included in the yard spindle set to be packaged, so that according to the quantity of packagings, the packaging equipment on the packaging line in the yard spindle packaging workshop may be controlled to perform the packaging task included in the automatic packaging task.

For example, each yard spindle packaging box used when the automatic packaging task is performed may accommodate 6 packageable yard spindles. Based on the original vacant information in the basic data corresponding to the target transport tool, it can be determined that the original quantity of packageable yard spindles included in the yard spindle set to be packaged is 3012, and based on the updated basic data, the actual quantity of packageable yard spindles included in the yard spindle set to be packaged is 3000. In this case, based on the actual quantity of packageable yard spindles included in the yard spindle set to be packaged, the quantity of packagings corresponding to the yard spindle set to be packaged is 3000/6=500, not 3012/6=502. Therefore, the packaging equipment on the packaging line in the yard spindle packaging workshop may be controlled according to the packaging quantity 500, to perform the packaging tasks included in the automatic packaging task, instead of controlling the packaging equipment on the packaging line in the yard spindle packaging workshop to perform the packaging tasks included in the automatic packaging task according to the packaging quantity 502.

Through the above steps included in step S103, in the embodiment of the present disclosure, the actual quantity of packageable yard spindles included in the yard spindle set to be packaged may be accurately obtained based on the updated basic data. In this way, when the automatic packaging task for the yard spindle set to be packaged is executed based on the updated basic data, an error rate of the automatic packaging task may be reduced, thereby further reducing time consumed by manual intervention and error handling, so as to further improve the execution efficiency of the yard spindle packaging task.

In some optional embodiments, step S103 may also include the following steps.:

Step S103-21, if an urgent packaging task is received and there is a second target yard spindle set matching the urgent packaging task among the N batches of packageable yard spindles, a target packaging sequence is obtained based on the predetermined packaging sequence.

In an example, the urgent packaging task may be sent by a sales system, and the production batch number and the required quantity of the yard spindles to be urgently packaged may be determined based on the received urgent packaging task, so as to determine whether there is the second target yard spindle set matching the urgent packaging task among the N batches of packageable yard spindles based on the production batch number and the required quantity of the yard spindles to be urgently packaged. For example, if there is a batch of packageable yard spindles among N batches of packageable yard spindles, the production batch numbers of a plurality of packageable yard spindles included in this batch of packageable yard spindles are the same as the production batch numbers of yard spindles that need to be urgently packaged, and the original quantity of packageable yard spindles included in this batch of packageable yard spindles is greater than or equal to the required number of yard spindles that need to be urgently packaged, it is determined that there is the second target yard spindle set matching the urgent packaging task among the N batches of packageable yard spindles; otherwise, it is determined that there is no second target yard spindle set matching the urgent packaging task among the N batches of packageable yard spindles.

In addition, in an example, the target packaging sequence may be obtained in the following manner:
First, the current packageable yard spindle set among the N batches of packageable yard spindles may be determined. In an example, the current packageable yard spindle set may be a batch of packageable yard spindles that are being transferred from the balancing room to the yard spindle packaging workshop and automatically packaged on the packaging line.

After determining the current packageable yard spindle set, the packageable yard spindles whose packaging sequence is before the current packageable yard spindle set may be deleted from the predetermined packaging sequence to obtain a remaining packaging sequence; when the current packageable yard spindle set is the second target yard spindle set, the remaining packaging sequence is used as the target packaging sequence; when the current packageable yard spindle set is not the second target yard spindle set, a designated packaging end time of the second target yard spindle set may be determined based on the urgent packaging task, and a first theoretical packaging end time of the second target yard spindle set may be determined based on the remaining packaging sequence, so that when the designated packaging end time is earlier than the first theoretical packaging end time, the remaining packaging sequence may be adjusted to obtain the target packaging sequence, and when the designated packaging end time is later than the first theoretical packaging end time, the remaining packaging sequence may be used as the target packaging sequence.

Further, in a specific example, after obtaining the remaining packaging sequence, at least one batch of packageable yard spindles whose packaging sequence is before the packaging sequence of the second target yard spindle set may be determined from the remaining packaging sequence; a first packaging duration required to perform the automatic packaging task for the at least one batch of packageable yard spindles may be estimated; a second packaging duration required to perform the automatic packaging task for the second target yard spindle set may be estimated; and based on the current time point, the first packaging duration and the second packaging duration, the first theoretical packaging end time of the second target yard spindle set may be determined. In an example, for each batch of packageable yard spindles, the first packaging duration required to perform the automatic packaging task for this batch of packageable yard spindles may be estimated based on the original quantity of this batch of packageable yard spindles; for the second target yard spindle set, the second packaging duration required to perform the automatic packaging task for the second target yard spindle set may be estimated based on the original quantity of the second target yard spindle set; and the first theoretical packaging end time may be another time point located after the current time point and separated from the current time point by a first total duration (i.e., a sum of the first packaging duration and the second packaging duration).

In another specific example, when the designated packaging end time of the second target yard spindle set is earlier than the first theoretical packaging end time, a third packaging duration required to perform the automatic packaging task for the remaining current packageable yard spindle set may be estimated; based on the current time point, the second packaging duration and the third packaging duration, a second theoretical packaging end time of the second target yard spindle set after adjusting the packaging sequence of the second target yard spindle set in the remaining packaging sequence to a second priority may be determined; when the designated packaging end time is earlier than the second theoretical packaging end time, the packaging sequence of the second target yard spindle set in the remaining packaging sequence may be adjusted to the first priority to obtain the target packaging sequence; and when the designated packaging end time is later than the second theoretical packaging end time, the packaging sequence of the second target yard spindle set in the remaining packaging sequence may be adjusted to the second priority to obtain the target packaging sequence. In an example, for the remaining current packageable yard spindles, the third packaging duration required to perform the automatic packaging task for the remaining current packageable yard spindles may be estimated based on the original quantity of the remaining current packageable yard spindles; and the second theoretical packaging end time may be another time point located after the current time point and separated from the current time point by a second total duration (i.e., a sum of the second packaging duration and the third packaging duration).

For example, N is equal to 4, and the 4 batches of packageable yard spindles are the first batch of yard spindle products, the second batch of yard spindle products, the third batch of yard spindle products and the fourth batch of yard spindle products, respectively. The predetermined packaging sequence of these 4 batches of packageable yard spindles may be: the third batch of yard spindle products > the fourth batch of yard spindle products > the second batch of yard spindle products > the first batch of yard spindle products. Assuming that the current packageable yard spindle set among the 4 batches of packageable yard spindles is the third batch of yard spindle products, the third batch of yard spindle products may be deleted from the predetermined packaging sequence to obtain the remaining packaging sequence: the fourth batch of yard spindle products > the second batch of yard spindle products > the first batch of yard spindle products.

After that, if an urgent packaging task is received, there is a second target yard spindle set matching the urgent packaging task among the 4 batches of packageable yard spindles, and the second target yard spindle set is the fourth batch of yard spindle products, the remaining packaging sequence may be used as the target packaging sequence, that is, the target packaging sequence is: the fourth batch of yard spindle products (the second target yard spindle set) > the second batch of yard spindle products > the first batch of yard spindle products.

If an urgent packaging task is received, there is a second target yard spindle set matching the urgent packaging task among the 4 batches of packageable yard spindles, and the second target yard spindle set is the first batch of yard spindle products, the designated packaging end time of the second target yard spindle set may be determined based on the urgent packaging task, and the first theoretical packaging end time of the second target yard spindle set may be determined based on the remaining packaging sequence.

Assuming that the designated packaging end time is 10:00:00 on January 6, 2024, and the first theoretical packaging end time is 10:00:00 on January 7, 2024, that is, the designated packaging end time is earlier than the first theoretical packaging end time, the remaining packaging sequence may be adjusted to obtain the target packaging sequence. For example, when the designated packaging end time is earlier than the second theoretical packaging end time (assuming that the second theoretical packaging end time is 18:00:00 on January 6, 2024), the packaging sequence of the second target yard spindle set in the remaining packaging sequence may be adjusted to the first priority to obtain the target packaging sequence: the first batch of yard spindle products (the second target yard spindle set) > the fourth batch of yard spindle products > the second batch of yard spindle products. For another example, when the designated packaging end time is later than the second theoretical packaging end time (assuming that the second theoretical packaging end time is 10:00:00 on January 5, 2024), the packaging sequence of the second target yard spindle set in the remaining packaging sequence may be adjusted to the second priority to obtain the target packaging sequence: the fourth batch of yard spindle products > the first batch of yard spindle products (the second target yard spindle set) > the second batch of yard spindle products.

Assuming again that the designated packaging end time is 18:00:00 on January 7, 2024, and the first theoretical packaging end time is 10:00:00 on January 7, 2024, that is, the designated packaging end time is later than the first theoretical packaging end time, the remaining packaging sequence may be used as the target packaging sequence, that is, the target packaging sequence is: the fourth batch of yard spindle products (the second target yard spindle set) > the second batch of yard spindle products > the first batch of yard spindle products.

Step S103-22, the automatic packaging task for the second target yard spindle set is performed based on the target packaging sequence, so as to cause an actual packaging end time of the second target yard spindle set to be earlier than the designated packaging end time of the second target yard spindle set.

Continuing with the above example, when the target packaging sequence is: the first batch of yard spindle products (the second target yard spindle set) > the fourth batch of yard spindle products > the second batch of yard spindle products, the fourth batch of yard spindle products that are being automatically packageable on the packaging line may be processed to be doffed, so as to timely perform the automatic packaging task for the first batch of yard spindle products, and after the automatic packaging task for the first batch of yard spindle products is completed, the automatic packaging task for the remaining fourth batch of yard spindle products continues to be performed. When the target packaging sequence is: the fourth batch of yard spindle products (the second target yard spindle set) > the second batch of yard spindle products > the first batch of yard spindle products or the fourth batch of yard spindle products > the first batch of yard spindle products (the second target yard spindle set) > the second batch of yard spindle products, the automatic packaging task for the remaining fourth batch of yard spindle products may be continued, and after the automatic packaging task for the remaining fourth batch of yard spindle products is completed, the automatic packaging task for other batches of packageable yard spindles may continue to be performed according to the target packaging sequence. Here, the automatic packaging task for other batches of packageable yard spindles may include performing the automatic packaging task for the second target yard spindle set.

Through the above steps included in step S103, in the embodiment of the present disclosure, when an urgent packaging task is received and there is a second target yard spindle set matching the urgent packaging task among N batches of packageable yard spindles, a target packaging sequence may be obtained based on the predetermined packaging sequence, and based on the target packaging sequence, the automatic packaging task for the second target yard spindle set may be performed, so as to cause the actual packaging end time of the second target yard spindle set to be earlier than the designated packaging end time of the second target yard spindle set, thereby improving the controllability and flexibility of the packaging task control method.

In order to better implement the above packaging task control method, an embodiment of the present disclosure also provides a packaging task control apparatus, which may be applied to electronic devices such as computers and PLCs. Below, a packaging task control apparatus 400 provided according to the embodiment of the present disclosure will be described in conjunction with the schematic structural diagram shown in FIG. 4.

The packaging task control apparatus 400 may include:
an information determination unit 401, used to determine N batches of packageable yard spindles from a balancing room according to a preset time interval, and determine a storage duration and a storage quantity of each batch of packageable yard spindles in the balancing room among the N batches of packageable yard spindles. In an example, N is an integer equal to or greater than 2;
a sequence obtaining unit 402, used to obtain a predetermined packaging sequence of the N batches of packageable yard spindles based on the storage duration and the storage quantity of each batch of packageable yard spindles in the balancing room among the N batches of packageable yard spindles;
a packaging task control unit 403, used to perform an automatic packaging task for the N batches of packageable yard spindles according to the predetermined packaging sequence.

In some optional embodiments, the information determination unit 401 may be used to:
obtain a highest representation temperature of each batch of yard spindle products among M batches of yard spindle products stored in the balancing room, where M is equal to or greater than N and is an integer;
obtain a current room temperature in the balancing room as a temperature threshold; and
take N batches of yard spindle products whose highest representation temperature is less than or equal to the temperature threshold among the M batches of yard spindle products as N batches of packageable yard spindles.

In some optional implementations, the information determination unit 401 may be used to:
use each batch of yard spindle products among the M batches of yard spindle products stored in the balancing room as the first target yard spindle set, to obtain a latest yard spindle doffing time corresponding to the first target yard spindle set, and estimate a highest representation temperature of the first target yard spindle set based on the latest yard spindle doffing time corresponding to the first target yard spindle set, or to obtain a temperature sampling result corresponding to the first target yard spindle set, and obtain a highest representation temperature of the first target yard spindle set based on the temperature sampling result corresponding to the first target yard spindle set.

In some optional embodiments, the sequence obtaining unit 402 may be used to:
in a case that there are Z batches of first target yard spindles whose storage duration in the balancing room exceeds a preset duration threshold among the N batches of packageable yard spindles, determine Z batches of first target yard spindles from the N batches of packageable yard spindles, and determine K batches of second target yard spindles other than the Z batches of first target yard spindles, where Z may be an integer equal to or greater than 1 and less than or equal to N, and K may be an integer equal to or greater than 1 and less than or equal to N;
arrange the Z batches of first target yard spindles in descending order according to the storage duration, to obtain a first predetermined sequence of the Z batches of first target yard spindles;
arrange the K batches of second target yard spindles in descending order according to the storage quantity, to obtain a second predetermined sequence of the K batches of second target yard spindles; and
arrange the K batches of second target yard spindles arranged in the second predetermined sequence after the Z batches of first target yard spindles arranged in the first predetermined sequence, to obtain the predetermined packaging sequence of the N batches of packageable yard spindles.

In some optional embodiments, the packaging task control unit 403 may be used to:
determine a yard spindle set to be packaged from the N batches of packageable yard spindles according to the predetermined packaging sequence;
control a target transport tool for loading at least part of the packageable yard spindles in the yard spindle set to be packaged among a plurality of yard spindle transport tools to move from the balancing room to the yard spindle packaging workshop;
obtain an overall loading situation representation diagram of the target transport tool;
if determining, based on the overall loading status representation diagram, that basic data corresponding to the target transport tool needs to be updated, update the basic data to obtain the updated basic data; and
perform an automatic packaging task for the yard spindle set to be packaged based on the updated basic data.

In some optional embodiments, the packaging task control unit 403 may be used to:
obtain actual vacancy information of the target transport tool based on the overall loading situation representation diagram, where the actual vacancy information may be used to represent the actual vacancy situation of each of the plurality of yard spindle loading positions of the target transport tool; and
determine that the basic data corresponding to the target transport tool needs to be updated when the actual vacancy information is different from the original vacancy information in the basic data.

In some optional implementations, the packaging task control unit 403 may be used to:
obtain a target packaging sequence based on the predetermined packaging sequence when an urgent packaging task is received and there is a second target yard spindle set matching the urgent packaging task among the N batches of packageable yard spindles; and
perform the automatic packaging task for the second target yard spindle set based on the target packaging sequence, so as to cause an actual packaging end time of the second target yard spindle set to be earlier than a designated packaging end time of the second target yard spindle set, where the designated packaging end time is obtained based on the urgent packaging task.

For the description of specific functions and examples of each unit in the packaging task control apparatus 400 provided according to the embodiment of the present disclosure, reference may be made to relevant descriptions of the corresponding steps in the above method embodiment, which will not be repeated here.

In the technical solution of the present disclosure, the acquisition, storage and application of the user's personal information involved are all in compliance with the provisions of relevant laws and regulations, and do not violate public order and good customs.

FIG. 5 is a schematic structural block diagram of an electronic device provided according to an embodiment of the present disclosure. As shown in FIG. 5, the electronic device may include a memory 501 and a processor 502, and the memory 501 may store a computer program executable on the processor 502. The number of memory 501 and processor 502 may be one or more. The memory 501 may store one or more computer programs, and when the one or more computer programs are executed by the electronic device, the electronic device performs the method provided according to the above method embodiments. The electronic device may also include a communication interface 503 which is used to communicate with an external device and perform data exchange transmission.

If the memory 501, the processor 502 and the communication interface 503 are implemented independently, the memory 501, the processor 502 and the communication interface 503 may be connected to each other via a bus and complete mutual communication. The bus may be an Industry Standard Architecture (ISA) bus, a Peripheral Component Interconnect (PCI) bus or an Extended Industry Standard Architecture (EISA) bus, etc. The bus may include an address bus, a data bus, a control bus, etc. For ease of representation, only one thick line is used to represent the bus in FIG. 5, but it does not mean that there is only one bus or one type of bus.

Optionally, in a specific implementation, if the memory 501, the processor 502 and the communication interface 503 are integrated on a chip, the memory 501, the processor 502 and the communication interface 503 can communicate with each other via internal interfaces.

It should be understood that the above-mentioned processor may be a central processing unit (CPU), or other general-purpose processor, a digital signal processor (DSP), an application-specific integrated circuit (ASIC), a field programmable gate arrays (FPGA) or other programmable logic device, a discrete gate or a transistor logic device, a discrete hardware component, etc. The general-purpose processor may be a microprocessor or any conventional processor, etc. It is noticed that the processor may be a processor that supports the Advanced RISC Machines (ARM) architecture.

Further, optionally, the above-mentioned memory may include a read-only memory and a random access memory, and may also include a non-volatile random access memory. The memory may be a volatile memory or a non-volatile memory, or may include both volatile and non-volatile memories. The non-volatile memory may include a read-only memory (ROM), a programmable read-only memory (PROM), an erasable programmable read-only memory (EPROM), an electrically erasable programmable read-only memory (EEPROM), or a flash memory. The volatile memory may include a random access memory (RAM), which may be used as an external cache. By way of example but not limitation, many forms of RAM are available. For example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM) and a direct RAMBUS RAM (DR RAM).

In the above embodiments, all or part of them may be implemented by software, hardware, firmware or any combination thereof. When implemented by software, they may be implemented in whole or in part in the form of a computer program product. The computer program product may include one or more computer instructions. When the computer instructions are loaded and executed on the computer, the process or function according to the embodiment of the present disclosure may be generated in whole or in part. The computer may be a general-purpose computer, a special-purpose computer, a computer network or other programmable apparatus. Computer instructions may be stored in a computer-readable storage medium, or transmitted from a computer-readable storage medium to another computer-readable storage medium. For example, computer instructions may be transmitted from one website, computer, server or data center to another website, computer, server or data center through wired (e.g., coaxial cable, optical fiber, digital subscriber line (DSL)) or wireless (e.g., infrared, Bluetooth, microwave, etc.) means. Computer-readable storage media may be any available medium accessible by a computer, or a data storage device such as a server or data center that includes one or more integrated available media. Available media may be magnetic media (e.g., floppy disks, hard disks, and tapes), optical media (e.g., digital versatile discs (DVD)) or semiconductor media (e.g., solid state drives (SSD)), etc. It is noticed that the computer-readable storage medium mentioned in the present disclosure may be a non-volatile storage medium or a non-transient storage medium.

Those skilled in the art should understand that all or part of the steps to implement the above-mentioned embodiments may be implemented by hardware, or may be implemented by instructing the relevant hardware through a program, and the program may be stored in a computer-readable storage medium, and the storage medium mentioned above may be a read-only memory, a disk or an optical disk, etc.

In the description of the embodiments of the present disclosure, the description of the reference terms "one embodiment", "some embodiments", "an example", "a specific example", or "some examples" means that the specific features, structures, materials or characteristics described in combination with the embodiment or example are included in at least one embodiment or example of the present disclosure. Moreover, the specific features, structures, materials or characteristics described may be combined in any one or more embodiments or examples in a suitable manner. In addition, in the absence of contradiction, those skilled in the art may combine and combine different embodiments or examples described in this specification and the features of different embodiments or examples.

In the description of the embodiments of the present disclosure, unless otherwise specified, "/" means or. For example, A/B may mean A or B. "And/or" herein is only a kind of association relationship describing the associated objects, indicating that there may be three relationships. For example, A and/or B may mean only A, both A and B, and only B.

In the description of the embodiments of the present disclosure, terms "first", "second", and "third" are used for descriptive purposes only and cannot be understood as indicating or implying relative importance or implicitly specifying the number of the indicated technical features. Therefore, the features defined as "first", "second", and "third" may explicitly or implicitly include one or more of the features. In the description of the embodiments of the present disclosure, unless otherwise specified, "a plurality of" means two or more.

The above are only exemplary embodiments of the present disclosure and are not intended to limit the present disclosure. Any modifications, equivalent substitutions, improvements, etc. made within the principles of the present disclosure should be included in the scope of protection of the present disclosure.

## Claims

1. A packaging task control method, comprising:
determining (S101) N batches of packageable yard spindles from a balancing room according to a preset time interval, and determining a storage duration and a storage quantity of each batch of packageable yard spindles in the balancing room among the N batches of packageable yard spindles, wherein N is an integer equal to or greater than 2;
obtaining (S102) a predetermined packaging sequence of the N batches of packageable yard spindles based on the storage duration and the storage quantity of each batch of packageable yard spindles in the balancing room among the N batches of packageable yard spindles; and
performing (S103) an automatic packaging task for the N batches of packageable yard spindles according to the predetermined packaging sequence.

2. The method of claim 1, wherein determining (S101) the N batches of packageable yard spindles from the balancing room comprises:
obtaining a highest representation temperature of each batch of yard spindle products among the M batches of yard spindle products stored in the balancing room, wherein M is an integer equal to or greater than N;
obtaining a current room temperature in the balancing room as a temperature threshold; and
using N batches of yard spindle products whose highest representation temperature is less than or equal to the temperature threshold among the M batches of yard spindle products as the N batches of packageable yard spindles.

3. The method of claim 2, wherein obtaining the highest representation temperature of each batch of yard spindle products among the M batches of yard spindle products stored in the balancing room, comprises:
using each batch of yard spindle products among the M batches of yard spindle products stored in the balancing room as a first target yard spindle set, to obtain a latest yard spindle doffing time corresponding to the first target yard spindle set and estimate the highest representation temperature of the first target yard spindle set based on the latest yard spindle doffing time corresponding to the first target yard spindle set, or obtain a temperature sampling result corresponding to the first target yard spindle set and obtain the highest representation temperature of the first target yard spindle set based on the temperature sampling result corresponding to the first target yard spindle set.

4. The method of claim 1, wherein obtaining (S102) the predetermined packaging sequence of the N batches of packageable yard spindles based on the storage duration and the storage quantity of each batch of packageable yard spindles in the balancing room among the N batches of packageable yard spindles, comprises:
in a case of there are Z batches of first target yard spindles whose storage duration in the balancing room exceeds a preset duration threshold among the N batches of packageable yard spindles, determining the Z batches of first target yard spindles from the N batches of packageable yard spindles, and determining K batches of second target yard spindles other than the Z batches of first target yard spindles, wherein Z is an integer equal to or greater than 1 and less than or equal to N, and K is an integer equal to or greater than 1 and less than or equal to N;
arranging the Z batches of first target yard spindles in descending order according to the storage duration, to obtain a first predetermined sequence of the Z batches of first target yard spindles;
arranging the K batches of second target yard spindles in descending order according to the storage quantity, to obtain a second predetermined sequence of the K batches of second target yard spindles; and
arranging the K batches of second target yard spindles arranged in the second predetermined sequence after the Z batches of first target yard spindles arranged in the first predetermined sequence, to obtain the predetermined packaging sequence of the N batches of packageable yard spindles.

5. The method of any one of claims 1 to 4, wherein performing (S103) the automatic packaging task for the N batches of packageable yard spindles according to the predetermined packaging sequence, comprises:
determining a yard spindle set to be packaged from the N batches of packageable yard spindles according to the predetermined packaging sequence;
controlling a target transport tool for loading at least part of packageable yard spindles in the yard spindle set to be packaged among a plurality of yard spindle transport tools to move from the balancing room to a yard spindle packaging workshop;
obtaining an overall loading situation representation diagram of the target transport tool;
after determining, based on the overall loading situation representation diagram, that basic data corresponding to the target transport tool needs to be updated, updating the basic data to obtain updated basic data; and
performing an automatic packaging task for the yard spindle set to be packaged based on the updated basic data.

6. The method of claim 5, wherein determining, based on the overall loading situation representation diagram, that the basic data corresponding to the target transport tool needs to be updated, comprises:
obtaining actual vacancy information of the target transport tool based on the overall loading situation representation diagram, wherein the actual vacancy informance is used to represent an original vacancy situation of each yard spindle loading position among a plurality of yard spindle loading positions of the target transport tool; and
in a case of the actual vacancy information is different from original vacancy information in the basic data, determining that the basic data corresponding to the target transport tool needs to be updated.

7. The method of any one of claims 1 to 4, wherein performing (S103) the automatic packaging task for the N batches of packageable yard spindles according to the predetermined packaging sequence, comprises:
in a case of an urgent packaging task is received and there is a second target yard spindle set matching the urgent packaging task among the N batches of packageable yard spindles, obtaining a target packaging sequence based on the predetermined packaging sequence; and
performing the automatic packaging task for the second target yard spindle set based on the target packaging sequence, so as to cause an actual packaging end time of the second target yard spindle set to be earlier than a designated packaging end time of the second target yard spindle set.

8. A packaging task control apparatus, comprising:
an information determination unit (401), configured to determine N batches of packageable yard spindles from a balancing room according to a preset time interval, and determine a storage duration and a storage quantity of each batch of packageable yard spindles in the balancing room among the N batches of packageable yard spindles, wherein N is an integer equal to or greater than 2;
a sequence obtaining unit (402), configured to obtain a predetermined packaging sequence of the N batches of packageable yard spindles based on the storage duration and the storage quantity of each batch of packageable yard spindles in the balancing room among the N batches of packageable yard spindles; and
a packaging task control unit (403), configured to perform an automatic packaging task for the N batches of packageable yard spindles according to the predetermined packaging sequence.

9. The apparatus of claim 8, wherein the information determination unit (401) is configured to:
obtain a highest representation temperature of each batch of yard spindle products among the M batches of yard spindle products stored in the balancing room, wherein M is an integer equal to or greater than N;
obtain a current room temperature in the balancing room as a temperature threshold; and
use N batches of yard spindle products whose highest representation temperature is less than or equal to the temperature threshold among the M batches of yard spindle products as the N batches of packageable yard spindles.

10. The apparatus of claim 9, wherein the information determination unit (401) is configured to:
use each batch of yard spindle products among the M batches of yard spindle products stored in the balancing room as a first target yard spindle set, to obtain a latest yard spindle doffing time corresponding to the first target yard spindle set and estimate the highest representation temperature of the first target yard spindle set based on the latest yard spindle doffing time corresponding to the first target yard spindle set, or obtain a temperature sampling result corresponding to the first target yard spindle set and obtain the highest representation temperature of the first target yard spindle set based on the temperature sampling result corresponding to the first target yard spindle set.

11. The apparatus of claim 8, wherein the sequence obtaining unit (402) is configured to:
in a case of there are Z batches of first target yard spindles whose storage duration in the balancing room exceeds a preset duration threshold among the N batches of packageable yard spindles, determine the Z batches of first target yard spindles from the N batches of packageable yard spindles, and determine K batches of second target yard spindles other than the Z batches of first target yard spindles, wherein Z is an integer equal to or greater than 1 and less than or equal to N, and K is an integer equal to or greater than 1 and less than or equal to N;
arrange the Z batches of first target yard spindles in descending order according to the storage duration, to obtain a first predetermined sequence of the Z batches of first target yard spindles;
arrange the K batches of second target yard spindles in descending order according to the storage quantity, to obtain a second predetermined sequence of the K batches of second target yard spindles; and
arrange the K batches of second target yard spindles arranged in the second predetermined sequence after the Z batches of first target yard spindles arranged in the first predetermined sequence, to obtain the predetermined packaging sequence of the N batches of packageable yard spindles.

12. The apparatus of any one of claims 8 to 11, wherein the packaging task control unit (403) is configured to:
determine a yard spindle set to be packaged from the N batches of packageable yard spindles according to the predetermined packaging sequence;
control a target transport tool for loading at least part of packageable yard spindles in the yard spindle set to be packaged among a plurality of yard spindle transport tools to move from the balancing room to a yard spindle packaging workshop;
obtain an overall loading situation representation diagram of the target transport tool;
after determining, based on the overall loading situation representation diagram, that basic data corresponding to the target transport tool needs to be updated, update the basic data to obtain the updated basic data; and
perform an automatic packaging task for the yard spindle set to be packaged based on the updated basic data.

13. The apparatus of claim 12, wherein the packaging task control unit (403) is configured to:
obtain actual vacancy information of the target transport tool based on the overall loading situation representation diagram, wherein the actual vacancy informance is used to represent an original vacancy situation of each yard spindle loading position among a plurality of yard spindle loading positions of the target transport tool; and
in a case of the actual vacancy information is different from original vacancy information in the basic data, determine that the basic data corresponding to the target transport tool needs to be updated.

14. The apparatus of any one of claims 8 to 11, wherein the packaging task control unit (403) is configured to:
in a case of an urgent packaging task is received and there is a second target yard spindle set matching the urgent packaging task among the N batches of packageable yard spindles, obtain a target packaging sequence based on the predetermined packaging sequence; and
perform the automatic packaging task for the second target yard spindle set based on the target packaging sequence, so as to cause an actual packaging end time of the second target yard spindle set to be earlier than a designated packaging end time of the second target yard spindle set.

15. A non-transitory computer-readable storage medium storing a computer instruction thereon, wherein the computer instruction is used to cause a computer to execute the method of any one of claims 1 to 7.
